# EUROPEAN PATENT APPLICATION

(11) **EP 4 349 567 A1**
(43) Date of publication of application: **10.04.2024**
(21) Application number: 22836681.1
(22) Date of filing: 15.06.2022
(51) Int. Cl.: B29C 64/10, B29C 64/30, B22F 10/10, B22F 10/85, B33Y 10/00, B33Y 40/00, B33Y 50/02

(54) **ADDITIVE MANUFACTURING METHOD FOR MICRO-NANO STRUCTURE**

(30) Priority: 06.07.2021 CN 202110761096
(71) Applicant: Shanghaitech University, Shanghai 201210 (CN)
(72) Inventor: FENG, Jicheng, Shanghai 201210 (CN); LIU, Shirong, Shanghai 201210 (CN); LIU, Bingyan, Shanghai 201210 (CN)
(74) Representative: Canzler & Bergmeier Patentanwälte Partnerschaft mbB
(86) International application number: PCT/CN2022/098811
(87) International publication number: WO 2023/279927

(57) **Abstract**

Provided in the present invention is an additive manufacturing method for a micro-nano structure. Directed migration of a charged dispersion phase in a gas is controlled on the basis of the action of an electric field, such that the charged dispersion phase is stacked on a substrate to form a specific micro-nano structure. By means of the additive manufacturing technology for a micro-nano structure in the present invention, chemical reaction is not used, a laser source, an ion/electron beam and a photosensitive material are not needed, and an operation can be performed at a normal temperature and a normal pressure. By means of the provided technical solution, a micro-nano structure can be printed in a large area in one step with low cost, high purity, multiple materials, ultra-high resolution and ultra-high speed; and the problems of few types of printing materials, a low printing resolution, a low printing speed, sequential printing, etc., which are encountered during micro-nano-scale additive manufacturing, can be solved.

## Description

### Technical Field

The present disclosure relates to the field of micro-nano-scale 3D printing, and in particular, to an additive manufacturing method for fabricating 3D nanostructures.

### Background

Micro-nano-scale additive manufacturing (also referred to as micro-nano three-dimensional (3D) printing) is a new micro-nano fabrication technology to add up materials for manufacturing 3D nanostructures. Compared with micro-nano manufacturing technologies in the related art, micro-nano-scale additive manufacturing has many advantages; for example, it is inexpensive, it only requires simple equipment, there is a wide range of available printing materials, and objects can be directly printed without using laser, vacuum, or liquid reagent; moreover, micro-nano-scale additive manufacturing has outstanding potential and superiority especially when it comes to manufacturing of complex 3D nanostructures, 3D nanostructures with a high aspect ratio, and multi-material and multi-scale 3D nanostructures, printing of multiple 3D nanostructures in parallel, and manufacturing of embedded heterostructures.

However, all existing micro-nano-scale printing techniques have certain limitations. For example, micro-stereolithography suffers from a limited range of printing materials and low resolution, and it is also difficult to print structures that require support materials; two-photon polymerization-based direct laser writing suffers from high printing cost and low printing speed in spite of high resolution; electrohydrodynamic jet printing has strict requirements on the electrofluid used in printing, and has problems such as nozzle clogging, fluid impurities, and is inapplicable to parallel printing of multiple array structures. Although electron-beam printing and ion-beam printing can be adopted to print 3D nanostructures, they also suffer from a limited range of printing materials, extremely low printing speed, and strict requirements on operating conditions and precursor materials. More importantly, none of the above micro-nano-scale printing techniques can be used for fast printing and parallel printing of metal materials, while metal materials are uniquely advantageous for their mechanical and electrical performance and micro-nano-scale manufacturing of metal materials is of great significance to the research of microelectronics and nanophotonics.

Therefore, in order to meet scientific and practical needs, it is necessary to develop a new additive manufacturing method, process, and equipment, so as to rapidly print multi-material, large areas of various arrays of 3D nanostructures in a parallel manner.

### Summary

The present disclosure provides an additive manufacturing method for fabricating 3D nanostructures, so as to solve problems in the prior art of difficulty in rapidly printing multi-material 3D nanostructures in a parallel manner.

The present disclosure is implemented through the following technical solutions.

The present disclosure provides an additive manufacturing method for fabricating 3D nanostructures, comprising: controllably arranging charged species dispersed in a fluid at nanoscale in each dimension with a configured electric field; and printing the charged species onto a substrate to form an array of 3D nanostructures.

In an embodiment, the charged species dispersed in a fluid have a characteristic size from 0.1 nm to 10 µm.

In an embodiment, a material of the charged species includes at least one of an inorganic material, an organic material, and a composite material.

In an embodiment, the substrate is covered with or separated from a patterned layer with opening holes, and the charged species are directed to the substrate through the opening holes. Due to the configured electric fields, the stream of the charged species is shrunk to a much thinner size than that of the opening holes.

In an embodiment, the configured electric field includes an externally applied electric field, and an electric field strength of the externally applied electric field ranges from 1 V/cm to 10000 V/cm or from -10000 V/cm to -1 V/cm.

In an embodiment, the geometry and the size of the 3D nanostructures are controlled by the controlling distribution of the configured electric field, a strength of an externally applied electric field, and the movement of the substrate.

In an embodiment, the fluid is introduced at a flow rate of 0.1-100 L/min.

In an embodiment, a feature size of the 3D nanostructures ranges from 0.1 nm to 10 µm.

In an embodiment, the substrate is connected to a power source.

In an embodiment, the charged species are produced by plasma technologies, such as electrical discharges, or by an atomizer, or by electrospray. The printing is so conducted that the charged species serving as the particle source are in-situ printed to form various arrays of myriad of complex 3D nanostructures.

The additive manufacturing method for fabricating 3D nanostructures provided in the present disclosure has the following beneficial effects.
1) The whole printing process can be directly carried out under room temperature and atmospheric pressure, which greatly simplifies the equipment configuration, reduces costs, and broadens the operating range and the scope of available printing materials.
2) The whole printing process is operated in a mode where the electric field precisely guides the charged species, and this printing process does not introduce any impurities, so the printed 3D nanostructures have high uniformity and high purity.
3) There are a wide variety of materials for the charged species, serving as the particle source for the printing, resulting in virtually unlimited material choice for the 3D nanostructures. The present disclosure realizes the fast printing of multimaterials onto any surface directly without the need of multisteps of materials transfer encountered in photolithography/ electron-beam lithography technologies. The resolution and the feature size of printed materials are comparable with those fabricated by lithography technologies, but the applicable materials have a much wider range than the lithographic fabrications.
4) The related diffusivity in a gas phase for the dispersed species is at least three orders of magnitude higher than that in a corresponding liquid phase. The ultrafast kinetics gives a competitive advantage in the additive manufacturing method, which is its extremely fast printing speed. The direct positive consequence for this is that an array of 3D nanostructures with a large-area can be printed in one pass, resulting in the key advantages for fast and efficient printing. The number of 3D nanostructures ranges from 1 to 100 000 000 (or virtually unlimited number) and printed area covers from microns to centimeters. In combining the movement of the substrate, one can print the many 3D nanostructures over an area of in the order of meters to kilometers with the help of a translational step.
5) The arrangement of the charged species in a fluid can be accurately controlled by the electric field that is configured with proper pattern designs. This enables the printing to reach a high resolution in the range of a single particle size or even as small as a single atom, thus making the resolution down to 0.1 nm.

The present disclosure provides an additive manufacturing method for fabricating 3D nano-structures, which enables low-cost, ultra-fast printing speed, large-area, high-purity, multi-material, ultra-high-resolution, and solves the problems encountered in other nanofabrication techniques in making 3D nanostructures, such as a limited range of available printing materials, low resolution and slow printing speed, and one by one serial printing.

### Brief Description of the Drawings

FIG. 1 is a schematic diagram of a principle of a 3D printer used in an additive manufacturing method according to the present disclosure.
FIG. 2 is an SEM image of a product with a specific 3D nanostructure printed by an additive manufacturing method according to the present disclosure.
FIG. 3 is an SEM image of a product with a specific 3D nanostructure printed by an additive manufacturing method according to the present disclosure.
FIG. 4 is an SEM image of a product with a specific 3D nanostructure printed by an additive manufacturing method according to the present disclosure.

### Detailed Description

The following describes implementations of the present disclosure by using specific embodiments for verifying the practical feasibility of the method in the present disclosure. A person skilled in the art may easily understand other advantages and effects of the present disclosure from the content disclosed in this specification.

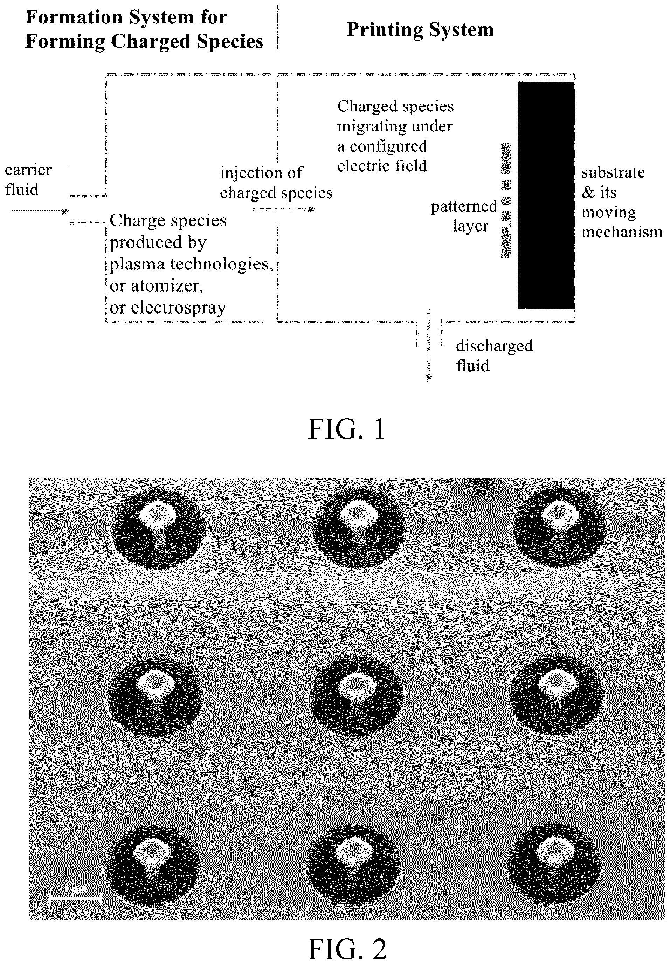

Please refer to FIG. 1 to FIG. 4. It should be noted that the structures, proportions, sizes, and the like shown in the drawings of this specification, in coordination with the content disclosed in this specification, are only used to help a person skilled in the art to read and understand, but are not intended to limit the conditions under which the present disclosure can be implemented. Any modifications to the structure, changes to the proportional relationship or adjustments on the size should fall within the scope of the technical content disclosed by the present disclosure without affecting the effects and the objectives that can be achieved by the present disclosure. In addition, the terms such as "upper", "lower', "left", "right", "middle", and "a" used in this specification are also merely for facilitating clear descriptions, but are not intended to limit the scope of implementation of the present disclosure. Without substantially changing the technical contents, changes or adjustments of relative relationships thereof should also fall within the scope of implementation of the present disclosure.

In order to solve the problems encountered in other nanofabrication techniques in making 3D nanostructures, such as low resolution, a limited range of available printing materials, and difficulty in printing metal materials, the present disclosure provides an additive manufacturing method for fabricating 3Dnanostructures. In practical manufacturing, a printer may be designed based on the additive manufacturing method of the present disclosure; the printer can implement micro-nano-scale additive manufacturing with materials that are capable of forming charged species in a gas, and control a geometry and a size of the 3D nanostructure by controlling distribution and strength of an electric field, and movement of a substrate, thereby rapidly printing multi-material, large 3D nanostructures in a parallel manner.

The present disclosure provides an additive manufacturing method for fabricating 3D nanostructures, where charged species dispersed in a fluid are precisely arranged at nanoscale in each dimension with a configured electric field, so that the charged species are printed onto a substrate to form an array of 3D nanostructures as desired. Herein, a configured electric field refers to an electric field whose electric field lines conform to a certain predesigned shape.

In the additive manufacturing method of the present disclosure, under the action of a spatial electric field, the charged species migrate directionally and are then printed at room temperature and atmospheric pressure, and structures obtained by the above additive manufacturing method have high uniformity and high purity, with no impurities introduced.

The gas involved in the present disclosure is essentially a multiphase fluid with a continuous phase when in a gaseous state and a dispersed phase when in a solid and/or liquid state. In one embodiment, the charged species are liquid and/or solid substance dispersed in the gas. In an embodiment, the charged species have a characteristic size from 0.1 nm to 10 µm. The charged species directionally migrate along electric field lines under the action of the electric field, which ensures effective and controllable printing. Electric charges of the charged species in the micro-nano-scale are uniform in distribution and migration paths, which ensures high printing precision.

In an embodiment, a material of the charged species includes at least one of an inorganic material, an organic material, and a composite material. In an embodiment, the inorganic material is metal, such as a metal element or an alloy. In an embodiment, the organic material is polymer or a biomolecular material.

In an embodiment, when the material of the charged species is conductive or semiconductive, for example, the material of the charged species is metal or semiconductor, the charged species are produced by electrical discharges. In an embodiment, the material of the charged species is a metal element or an alloy, that includes one or more of magnesium, aluminum, titanium, vanadium, chromium, manganese, iron, cobalt, nickel, copper, zinc, gallium, germanium, yttrium, zirconium, niobium, molybdenum, technetium, ruthenium, rhodium, palladium, silver, cadmium, indium, tin, antimony, hafnium, tantalum, tungsten, rhenium, iridium, platinum, gold, lead, and bismuth. In an embodiment, when the material of the charged species is conductive, it may further include a non-metal material including one or more of boron, carbon, silicon, and arsenic. The non-metal material may be an element or a compound composed of the above-mentioned metal element. In an embodiment, a carrier gas used in the method is one or more of nitrogen, inert gas, oxygen, hydrogen, and chlorine.

In another embodiment, when the dispersed species are in a liquid state, it is transformed into gaseous dispersed species by an atomizer or by electrospray, and the gaseous dispersed species are then transformed into the charged species used by the additive manufacturing method of the present disclosure. In this case, the material of the charged species may be an inorganic material, an organic material, or a composite material.

In an embodiment, the substrate is covered with a patterned layer with opening holes, and the charged species migrate onto the substrate through opening holes in the hollowed patterned layer. In the present disclosure, the opening holes on the patterned layer may be continuous or dispersed. In an embodiment, the opening holes on the patterned layer have dimensions in the micro-nano-range, and have a regular or irregular geometry. In an embodiment, a lower surface of the hollowed patterned layer and the substrate may be in contact with each other or may be separated from each other by a certain distance (e.g., 0-100 µm).

In an embodiment, the spatial electric field includes an externally applied electric field, and an electric field strength of the externally electric field ranges from 1 V/cm to 10000 V/cm or from-10000 V/cm to -1 V/cm.

As a result of the externally applied electric field and local electric fields formed on the surface of the patterned layer, and counterbalancing between the two types of electric fields, the spatial electric field required for printing is constructed. In this case, the spatial electric field is a configured electric field. The electric field lines of the spatial electric field converge at a central region of the opening holes on the patterned layer. The region where the electric field lines converge has dimensions in the sub-nanometer-to-micron range, which are much smaller than those of the opening holes. The region where the electric field lines converge has an electric field strength from one to two orders of magnitude higher than that of other regions (i.e., regions with parallel electric lines), which can induce injection of the charged species and accelerate its directional migration. The degree of convergence of the electric field lines is associated with the strength of the externally applied electric field. If the externally applied electric field is relatively weak, the degree of convergence of the electric field lines will be high, which improves printing precision, but the charged species will be less efficiently accelerated, resulting in a low printing speed. In addition, when the strength of the externally applied electric field dips below a lower critical value, the electric field lines will no longer converge, resulting in failure of printing. If the externally applied electric field is too strong, the electric field lines will also not converge. If the strength of the externally applied electric field reaches above an upper critical value, breakdown will occur in the gas thus sabotaging the whole printing process.

A material of the patterned layer with opening holes may be a dielectric material, such as silicon nitride, silicon oxide, or photoresist, or a conductive material, for example, metal. In an embodiment, the patterned layer with opening holes is conductive; specifically, the patterned layer with opening holes is coated with a conductive layer, and is embedded in an insulator, so that charges will accumulate on surfaces of the patterned layer, thereby increasing the degree of convergence of the electric field lines and achieving fast printing. In addition, the conductive layer may be connected to a power supply so that the power supply can be used to control an electric potential difference across the conductive layer, thereby regulating the degree of converge of the electric lines, the electric field strength, and 3D characteristics of the spatial electric field.

In an embodiment, a geometry and a size of the printed structure are controlled by controlling distribution and/or strength of the spatial electric field, and movement of the substrate. The printing resolution of the charged species is controlled through the spatial electric field. The 3D geometry of the converged electric field lines can be changed through movement of the substrate, so as to accurately arrange migration paths of the charged species, thereby printing a complex 3D structure. The charged species can be injected through a stable channel formed of the converged electric field lines, and onto precise sites. The printing geometry is at least partially determined by movement modes of the substrate. Different movement modes of the substrate are determined by parameters including the translational speed of the substrate relative to the patterned layer with opening holes. But it should be noted that when the speed of the substrate exceeds a threshold, a higher speed of the substrate will no longer impact the printing geometry except when the unfinished structure has a spike that extends upwards. Therefore, the movement of the substrate may be programmatically controlled to print a complex 2D or 3D structure. The printing geometry can also be adjusted by arrangement of the opening holes, positions of the opening holes with respect to the unfinished structure during printing, and distances between the opening holes and the unfinished structure.

In an embodiment, the gas is introduced at a flow rate of 0.1-100 L/min.

In an embodiment, the charged species migrate directionally in a three-dimensional way under the action of the spatial electric field.

The printing method of the present disclosure may be performed in a closed space or in an open space. In order to prevent external interference and provide a safe preparation environment, the printing method of the present disclosure is performed in a closed space in one embodiment.

In an embodiment of the present disclosure, the substrate is connected to a power source, e.g., a voltage source, to control distribution of electric charges in the printed structure. In addition, the substrate moves in different modes, to change the 3D geometry of the converged electric field lines, thereby changing the migration paths of the charged species and printing various products with required 3D nanostructures with dimensions from 1 nm to 10 µm. Although the geometry of the converged electric field lines does not change when the movement of the substrate is accelerated, printing of the charged species at precise sites may be induced by movement of the substrate.

In an embodiment, the charged species may be loaded into and then transported by a carrier gas, introduced to the region where the spatial electric field is, migrated onto the substrate under the action of the spatial electric field, and printed in a preset manner to form a 3D nanostructure. The carrier gas is one or more of nitrogen, inert gas, oxygen, hydrogen, and chlorine.

In the present disclosure, a printer for printing micro-nano-scale products is provided based on the above additive manufacturing method for fabricating 3D nanostructures, and the printer includes at least a formation system for forming charged species and a printing system. The printer in the present disclosure does not limit the scope of application of the additive manufacturing method, and the method is applicable to any printer that has a particle source system capable of producing charged species.

In an embodiment, the particle source of the charged species is produced by plasma technologies, and the spatial electric field required for printing is configured by combining the externally applied electric field and the local electric fields formed on the surface of the patterned layer with opening holes.

FIG. 1 is a schematic diagram of a principle of a 3D printer used in an additive manufacturing method according to the present disclosure.

FIGs. 2, 3, and 4 are SEM images of products with a 3D nanostructure printed by the additive manufacturing method. The specific preparation steps and parameters in each step are as follows:

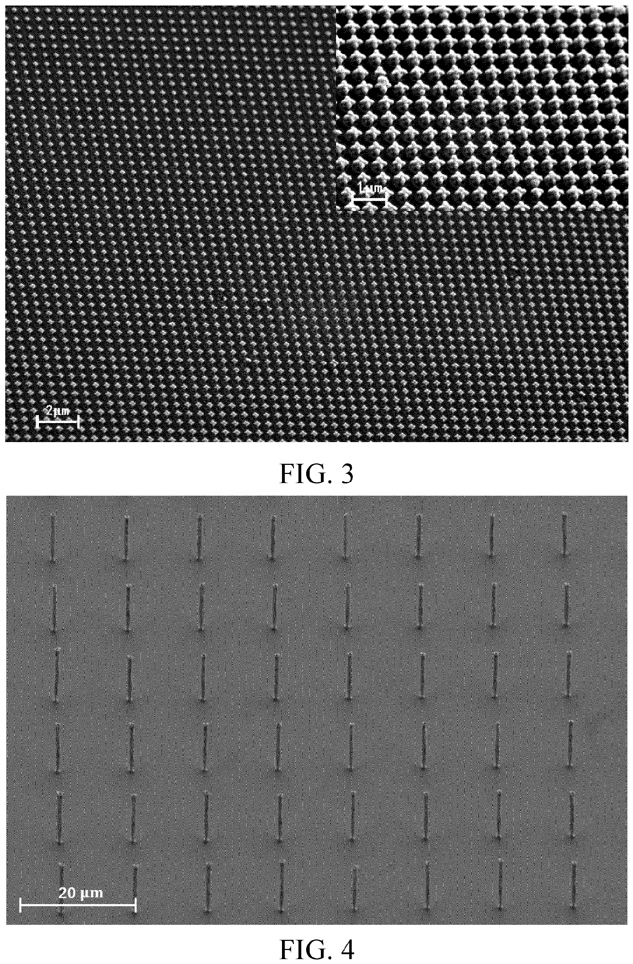

In Examples 1-3, a voltage of -2 KV is applied to a silicon wafer, and argon with a purity of 99.999% is continuously introduced at a flow rate of 5 L/min. Nanoparticles of the charged species are produced by plasma technologies, such as electrical discharges, which uses electrodes that are Ag or Cu with a purity of 99.999%, with a breakdown voltage of about 1.5 KV; as a result, about 7000 3D nanostructures as shown in FIG. 3 are printed in 1.5 hours.

### Example 1

A dielectric layer with a patterned array of opening holes is prepared on a silicon wafer.

In this example, S1805 photoresist with a thickness of about 500 nm is spin-coated on the silicon wafer to form a photoresist layer, and then an array of round holes with a diameter of 2 µm and a center-to-center distance of 6 µm are formed by photolithography. The array structure shown in FIG. 2 is then printed by the additive manufacturing method described above, with the dielectric layer serving as the patterned layer with opening holes, and the wafer serving as the substrate.

### Example 2

A dielectric layer with a patterned array of opening holes is prepared on a silicon wafer. In this example, 950 PMMAA3 photoresist with a thickness of about 100 nm is spin-coated on the silicon wafer to form a photoresist layer, and then an array of round holes with a diameter of 300 nm and a center-to-center distance of 600 nm are formed by electron-beam lithography. The array structure shown in FIG. 3 is then printed by the additive manufacturing method described above, with the dielectric layer serving as the patterned layer with opening holes, and the wafer serving as the substrate.

### Example 3

A dielectric layer with a patterned array of opening holes is prepared on a silicon wafer. In this example, a suspended patterned layer with opening holes coated with a silicon nitride film is prepared by photolithography and deep silicon etching. The array structure shown in FIG. 4 is then printed by the additive manufacturing method described above, with the dielectric layer serving as the patterned layer with opening holes, and the wafer serving as the substrate.

As described above, the present disclosure can efficiently print 3D structures with an ultra-high resolution (down to 0.1 nm) at low cost, and can solve problems encountered in other nanofabrication techniques in making 3D nanostructures, such as low resolution, a limited range of available printing materials, and difficulty in printing metal materials.

Therefore, the present disclosure effectively overcomes all the shortcomings of the prior art and has a high industrial value.

The above embodiments are illustrative of the principles and benefits of the disclosure rather than restrictive of the scope of the disclosure. Persons skilled in the art can make modifications and changes to the embodiments without departing from the spirit and scope of the disclosure. Therefore, all equivalent modifications and changes made by persons skilled in the art without departing from the spirit and technical concepts disclosed in the disclosure shall still be deemed falling within the scope of the claims of the disclosure.

## Claims

1. An additive manufacturing method for fabricating 3D nanostructures, comprising:
controllably arranging charged species dispersed in a fluid at nanoscale in each dimension with a configured electric field; and
printing the charged species onto a substrate to form an array of 3D nanostructures.

2. The additive manufacturing method as in claim 1, wherein the charged species dispersed in a fluid has a characteristic size from 0.1 nm to 10 µm.

3. The additive manufacturing method as in claim 1, wherein a material of the charged species includes at least one of an inorganic material, an organic material, and a composite material.

4. The additive manufacturing method as in claim 1, wherein the substrate is covered with or separated from a patterned layer with opening holes, and the charged species migrates onto the substrate by passing through opening holes in the patterned layer during migration.

5. The additive manufacturing method as in claim 1, wherein the configured electric field comprises an externally applied electric field, and an electric field strength of the externally applied electric field ranges from 1 V/cm to 10000 V/cm or from-10000 V/cm to -1 V/cm.

6. The additive manufacturing method as in claim 1, wherein a geometry and size for printing are controlled by controlling distribution of the configured electric field, an electric field strength of an externally applied electric field, and movement of the substrate.

7. The additive manufacturing method as in claim 1, wherein the fluid is introduced at a flow rate of 0.1-100 L/min, wherein the charged species are dispersed in the fluid.

8. The additive manufacturing method as in claim 1, wherein the charged species migrates directionally under the action of the electric field.

9. The additive manufacturing method as in claim 1, wherein the substrate is connected to a power source.

10. The additive manufacturing method as in claim 1, wherein the charged species are produced by plasma technologies comprising electrical discharges, or by an atomizer, or by electrospray.
